# EUROPÄISCHE PATENTSCHRIFT

(11) **EP 2 540 952 B1**
(45) Veröffentlichungstag und Bekanntmachung des Hinweises auf die Patenterteilung: **30.12.2015**
(21) Anmeldenummer: 12159777.7
(22) Anmeldetag: 15.03.2012
(51) Int. Cl.: E06B 9/62, H02H 7/085

(54) **Überwachungsvorrichtung für Gewichtsausgleichseinrichtung sowie damit versehener Gebäudeabschluss und Torantrieb**
Monitoring device for weight balancing device and building closure comprising same and door drive
Dispositif de surveillance pour installation d'équilibrage de poids ainsi que fermeture de bâtiment et entraînement de porte en étant équipés

(30) Priorität: 29.06.2011 DE 202011102570 U
(43) Veröffentlichungstag der Anmeldung: 02.01.2013
(73) Patentinhaber: Hörmann KG Antriebstechnik, 33803 Steinhagen (DE)
(72) Erfinder: Herbst, Bernhard, 33790 Halle (Westf.) (DE); Sanke, Michael, 33378 Rheda-Wiedenbrück (DE)
(74) Vertreter: Flügel Preissner Kastel Schober

(56) Entgegenhaltungen:
- DE-C2- 4 214 998

## Beschreibung

Die Erfindung betrifft eine Überwachungsvorrichtung zur Überwachung einer Gewichtsausgleichseinrichtung eines Gebäudeabschlusses. Außerdem betrifft die Erfindung eine mit einer solchen Überwachungsvorrichtung versehene Gebäudeabschlusseinrichtung sowie einen mit einer solchen Überwachungsvorrichtung versehenen Torantrieb.

Die Erfindung liegt insbesondere auf dem Gebiet von Gebäudeabschlüssen wie Türen und insbesondere Toren, deren Flügel durch eine Gewichtsausgleichseinrichtung ausgeglichen sind.

Gebäudeabschlusseinrichtungen, wie beispielsweise Rolltore, Sectionaltore oder Schwingtore oder Kipptore, werden oft zum Öffnen oder Schließen von einer Gewichtsausgleicheinrichtung unterstützt. Rolltore, Sectionaltore oder Schwingtore oder Kipptore werden oft mit Hilfe eines Motors geöffnet oder geschlossen. Gewichtsausgleicheinrichtungen, wie beispielsweise Einzel- oder Mehrfachzugfederpakete, werden in Toren zu dem Zweck eingebaut, dass die Antriebskraft des Motors weitestgehend zur Überwindung der Reibung des Öffnungs- oder Schließvorgangs verwendet wird, während das Gewicht des Gebäudeabschlusselements, z.B. der Flügel, wie insbesondere das Torblatt, selbst, von der Gewichtsausgleicheinrichtung getragen wird. Dadurch unterscheidet sich die zum Öffnen benötigte Antriebskraft wenig von der zum Schließen benötigten.

Ein Ausführungsbeispiel für eine Gewichtsausgleicheinrichtung, ein Mehrfachzugfederpaket, ist aus EP 0 890 009 D1 bekannt. Auch Antriebseinrichtungen, die beispielsweise einen Motor und ein Getriebe umfassen, sind für Gebäudeabschlusseinrichtungen bekannt. Ein Beispiel hierfür ist WO 2010/012610 A1, das einen Wellentorantrieb beschreibt.

Motorbetriebene Gebäudeabschlusseinrichtungen haben eine Sicherungsvorrichtung, die Personen oder Gegenstände während des Öffnens oder Schließens der Gebäudeabschlusseinrichtung vor Verletzungen bzw. Schäden schützt. Solche Sicherungsvorrichtungen sind beispielsweise in WO 00/42687 oder DE 42 14 998 C2 beschrieben. Dabei wird die momentan benötigte Antriebskraft zum Öffnen oder Schließen der Gebäudeabschlusseinrichtung mit einem Vergleichswert verglichen, der bei einer störungsfreien Fahrt ermittelt wurde. Ist die Differenz zwischen momentanem Wert und Vergleichswert zu groß, wird der Betrieb der Gebäudeabschlusseinrichtung gestoppt. Die Notabschaltungen besitzen Mechanismen, die Schwankungen in der Antriebskraft, wie sie beispielsweise durch Wind oder kaltes Wetter verursacht werden können, kompensieren können.

Ein kompletter Ausfall einer Gewichtsausgleichseinrichtung kann im schlimmsten Fall zum Absturz des Tores führen. Es wäre daher wünschenswert, einen drohenden Ausfall frühzeitig zu erkennen. Daher wäre es wünschenswert, möglichst früh den Ausfall eines von mehreren Kraftspeicherelementen wie z.B. einer Feder eines Federpakets zu erfassen.

Im nichtgewerblichen Bereich eingesetzte Tore oder dergleichen Gebäudeabschlusseinrichtungen werden allerdings in der Praxis nicht oder nur unzureichend gewartet, so dass der Ausfall einer Feder meist unbemerkt bleibt oder hingenommen wird. Wird das Tor dann weiter betrieben, so werden der Antrieb und die verbleibenden Kraftspeicherelemente über Gebühr belastet, so dass weitere Beschädigungen am Antrieb oder dem Gebäudeabschluss zu befürchten sind und das Risiko eines Totalausfalls oder gar eines Absturzes besteht.

Aufgabe der Erfindung ist es, die vorerwähnten Probleme zu vermeiden oder zumindest zu mildern.

Diese Aufgabe wird durch eine Überwachungsvorrichtung nach Anspruch 1 gelöst.

Vorteilhafte Verwendungen der Überwachungsvorrichtung sind Gegenstand der Nebenansprüche.

Vorteilhafte Ausgestaltungen der Erfindung sind Gegenstand der Unteransprüche.

Mit der Erfindung wird eine Überwachungsvorrichtung für eine Gewichtsausgleichseinrichtung von insbesondere motorisch angetriebenen Gebäudeabschlüssen geschaffen, die einfach und frühzeitig eine nachlassende Wirkung von Gewichtsausgleichseinrichtungen anzeigen kann.

Vorzugsweise ist bereits der Ausfall eines einzelnen von einer Mehrzahl von Kraftspeicherelementen der Gewichtsausgleichseinrichtung anzeigbar.

Gemäß eines ersten Aspekts schafft die Erfindung eine Überwachungsvorrichtung zur Überwachung einer Gewichtsausgleichseinrichtung einer Gebäudeabschlusseinrichtung, mit:
einer Erfassungseinrichtung zum Erfassen eines von der zum Öffnen der Gebäudeabschlusseinrichtung benötigten Öffnungskraft abhängigen Öffnungskraftparameters und zum Erfassen eines von der zum Schließen der Gebäudeabschlusseinrichtung benötigten Schließkraft abhängigen Schließkraftparameters und
einer Verarbeitungseinrichtung zum Überwachen des Zustands der Gewichtsausgleichseinrichtung anhand des Öffnungskraftparameters und des Schließkraftparameters. Die Überwachungsvorrichtung ist gekennzeichnet durch eine zum Erhalten eines Unterschiedswerts zwischen Öffnungskraft und Schließkraft aus Öffnungskraftparameter und Schließkraftparameter ausgebildete Differenzwerteinrichtung sowie eine zum Vergleichen dieses Unterschiedwerts zwischen Öffnungskraft und Schließkraft mit einem vorgegebenen Unterschieds-Vergleichswert ausgebildete Vergleichseinrichtung.

Gemäß einer vorteilhaften Ausgestaltung der Erfindung ist vorgesehen, dass die Überwachungsvorrichtung zum Erfassen eines Ausfalls eines von mehreren Kraftspeicherelementen der Gewichtsausgleichseinrichtung, insbesondere einer Feder eines Federpakets der Gewichtsausgleichseinrichtung oder einer Feder einer Mehrfachfedereinrichtung der Gewichtsausgleichseinrichtung, ausgebildet ist.

Es ist bevorzugt, dass eine Warneinrichtung zum Abgeben einer Warnung bei Auftreten einer nachlassenden Wirkung der Gewichtsausgleichseinrichtung vorgesehen ist.

Es ist weiter bevorzugt, dass die Warneinrichtung zum Abgeben eines Warnsignals bei Ausfall eines von mehreren Kraftspeicherelementen, wie insbesondere Federn, der Gewichtsausgleichseinrichtung ausgebildet ist.

Es ist weiter bevorzugt, dass sie einer Steuerung eines an einen Gebäudeabschluss anzuschließenden Gebäudeabschlussantriebs, insbesondere eines an ein Tor anzuschließenden Torantriebs, zugeordnet oder als Teil einer solches Steuerung ausgebildet ist.

Es ist weiter bevorzugt, dass die Differenzwerteinrichtung zur Bestimmung des Unterschieds der Parameterwerte des Öffnungskraftparameters und des Schließkraftparameters an jeweils denselben Stellungen der Gebäudeabschlusseinrichtung während des Öffnens und Schließens ausgebildet ist.

Es ist weiter bevorzugt, dass eine Extremwertbestimmungseinrichtung zum Bestimmen wenigstens eines Extremwertes des Öffnungskraftparameters und des Schließkraftparameters vorgesehen ist und dass die Differenzwerteinrichtung zur Bestimmung des Unterschieds der Extremwerte des Öffnungskraftparameters und des Schließkraftparameters ausgebildet ist.

Gemäß eines weiteren Aspekts der Erfindung ist eine Gebäudeabschlusseinrichtung vorgesehen mit einem mit eine Gewichtsausgleichseinrichtung versehenem Gebäudeabschluss und einer Überwachungsvorrichtung gemäß der Erfindung oder einer Ausführungsform davon zum Überwachen der Gewichtsausgleichseinrichtung.

Es ist weiter bevorzugt, dass die Gewichtsausgleichseinrichtung mindestens eine Zugfeder als Kraftspeicherelement aufweist und dass der Überwachungsvorrichtung eine Fehlfunktionsanzeige zur Anzeige eines Defekts wenigstens einer Zugfeder der Gewichtsausgleichseinrichtung beigeordnet ist.

Es ist weiter bevorzugt, dass eine Antriebtriebseinrichtung mit einem Motor zur Erzeugung der Antriebskraft zum Öffnen oder Schließen des Gebäudeabschlusses umfasst und dass die Erfassungseinrichtung die Öffnungs- und Schließkraftparameter anhand von Antriebsparametern wie Leistung, Strom und/oder Drehzahl erfasst.

Ein weiterer Aspekt der Erfindung betrifft einen Torantrieb zum Antreiben eines durch eine Gewichtsausgleichseinrichtung ausgeglichenen Tores, wobei der Torantrieb eine erfindungsgemäße Überwachungsvorrichtung zum Überwachen der Gewichtsausgleichseinrichtung aufweist.

Im Folgenden werden einige Vorteile der Erfindung oder vorteilhafter Ausführungsformen davon erläutert.

Es gibt auf dem Markt viele Torsysteme, bei denen ein Gewichtsausgleich mit einer Mehrzahl von Kraftspeicherelementen realisiert wird. Zum Beispiel sind Mehrfachfederpakete, die eine Mehrzahl von Federn als Kraftspeichern aufweisen, vorgesehen. Bei auf dem Markt befindlichen Toren der Hörmann KG zum Beispiel finden sich Mehrfachfederpakete zum Beispiel bei Sectionaltoren mit Federzugbeschlag (sogenannter Z-Beschlag), bei Schwingtoren und bei Rolltoren.

Die im Juni 2011 gültige Norm EN 12604 fordert eine Sicherung gegen das Abstürzen von vertikal bewegten Gebäudeabschlusselementen, wie beispielsweise Torblätter von Sectionaltoren oder Schwingtoren oder Rolltorpanzern von Rolltoren. Auf diese Sicherung kann verzichtet werden, wenn das Versagen einer Gewichtsausgleicheinrichtung ein Ungleichgewicht von nicht mehr als 200 N an der Hauptschließkante hervorruft.

Allerdings zeigt die Praxis, dass es keine Überwachungsvorrichtungen gibt, die ein solches Ausfallen mit geringen Kräften als Vorstadium eines Totalausfalls anzeigen, so dass zur Sicherheit doch Abstürzsicherungen vorgesehen werden müssen.

Weiter zeigt die Praxis, dass selbst angeschlossene Torantriebe, die über eine Kraftbegrenzung verfügen, das Versagen eines einzelnen Kraftspeicherelements wie z.B. das Versagen einer Feder eines Mehrfachfederpakets nicht anzeigen. Bisher ist dies auch noch nie so gefordert worden. Das Anzeigen eines Ausfalls einer Feder hat aber den Vorteil, dass frühzeitig ein Schaden gemeldet und behoben werden kann oder dass ein Weiterbetrieb des Antriebs verhindert werden kann, so dass erst die Feder ausgetauscht werden muss. Dies erhöht die Sicherheit; und es kann auf zusätzliche aufwändige Absturzsicherungen verzichtet werden.

Bisher eingesetzte Kraftabschaltungen an Torantrieben sind für die Erfassung des Ausfalls einer Feder nicht geeignet, da die Antriebe die Kraftschwelle entsprechend den Bedingungen (Witterung, Alterung) nachführen, um einen störungsfreien Betrieb zu gewährleisten.

Die Tatsache, dass besonders Gebäudeabschlusseinrichtungen mit Antriebssystemen im nichtgewerblichen Bereich unregelmäßig oder gar nicht gewartet werden, führt dazu, dass die Erfassung eines Nachlassens einer Wirkung der Gewichtsausgleichseinrichtung große sicherheitsrelevante Vorteile hat. Beispielsweise kann man eine defekte Zugfeder verborgen in einem Mehrzugfederpaket nicht unmittelbar erkennen. Daher besteht der Wunsch, dass zusätzlich zu dem 200 N-Kriterium ein Defekt in der Gewichtsausgleicheinrichtung der Gebäudeabschlusseinrichtung wahrnehmbar ist.

Die oben genannten Notabschaltungen derzeit bekannter Torantriebe eignen sich dafür nicht, da der Verlust der Zugspannung einer Zugfeder zu klein sein kann, als dass er von der Notabschaltung detektiert werden kann. Zudem kann eine Zugfeder auch außerhalb des Öffnungs- oder Schließvorgangs brechen, was die genannten Notabschaltungen nicht detektieren würden, da sich die Antriebskraftsverlaufskurve zwar in ihrem absoluten Wert verändern würde, allerdings nicht in ihrem Steigungsverlauf, ein relativer Wert, der die Grundlage für die Notabschaltungen sind.

Gemäß eines weiteren Aspekts schafft die Erfindung ein, vorzugsweise mit den erfindungsmäßen Vorrichtungen durchführbares Überwachungsverfahren zur Überwachung einer Gewichtsausgleichseinrichtung einer Gebäudeabschlusseinrichtung, mit den Schritten:
Erfassen eines von der zum Öffnen der Gebäudeabschlusseinrichtung benötigten Öffnungskraft abhängigen Öffnungskraftparameters und
Erfassen eines von der zum Schließen der Gebäudeabschlusseinrichtung benötigten Schließkraft abhängigen Schließkraftparameters und Überwachen des Zustands der Gewichtsausgleichseinrichtung anhand des Öffnungskraftparameters und des Schließkraftparameters. Hierzu wird vorgeschlagen, einen Unterschiedswert zwischen dem Öffnungskraftparameter und dem Schließkraftparameter zu bilden und diesen Unterschiedswert zu überwachen.

Vorteilhafterweise wird durch Vergleich der Öffnungskraft mit der Schließkraft ein Rückschluss auf den Zustand der Gewichtsausgleichseinrichtung gezogen. Hierzu wird vorteilhafterweise - wie dies grundsätzlich bekannt und üblich ist - ein mit der Kraft korrelierter Parameter, wie z.B. die Leistungsaufnahme, die Stromaufnahme oder die Drehzahl eines Antriebsmotors überwacht und wenigstens ein Wert des Parameters bei einem Öffnen mit einem entsprechend erhaltenen Wert beim Schließen verglichen. Vorteilhafterweise wird z.B. ein eine maximale Kraft im Öffnungsverlauf anzeigender (vorzugsweise lokaler) Extremwert beim Öffnen mit einem eine maximale Kraft im Schließverlauf anzeigenden (vorzugsweise lokaler) Extremwert beim Schließen verglichen und dieser Vergleich zur Überwachung der Gewichtsausgleichseinrichtung herangezogen.

Ein bevorzugtes Verfahren zum Erfassen eines Defekts einer Gewichtsausgleichseinrichtung wird im Folgenden erläutert.

Bei ausgeglichenen Torsystemen unterscheiden sich die Kräfte für das Öffnen und Schließen der Tore nicht im sehr großen Maße. Das Nachlassen oder Versagen einer Federspannung führt aber aufgrund der Schwerkraft zwangsläufig dazu, dass die Kräfte für das Öffnen der Tore größer und für das Schließen der Tore geringer werden.

Bei einer vorteilhaften Ausgestaltung bildet z.B. der Unterschied zwischen den anfangs min. und max. eingelernten Kräften die Basis (wird z.B. als ein anfänglicher vorgegebener Vergleichswert festgelegt) und wird nach jeder Torfahrt mit dem aktuellen Kräfteunterschied verglichen.

Sobald dieser Unterschied zu groß wird, meldet der Antrieb einen Fehler.

Der Unterschied bleibt aber gleich, wenn die Anlage generell schwergängiger läuft. Somit kann erreicht werden, dass die äußeren Einflüsse nicht zu dieser Fehlermeldung führen.

Da die Antriebe für den privaten Bereich in Regel über integrierte Beleuchtungen verfügen, könnte man diese Beleuchtung z.B. nach Abschluss einer Torfahrt 3x blinken lassen. Dies wäre für den Betreiber der Anlage natürlich deutlich sichtbar bzw. wahrnehmbar und als Warnsignal zum Anzeigen eines Defekts in der Gewichtsausgleichseinrichtung genutzt werden.

Die Überwachungsvorrichtung lässt sich z.B. in Software in der Steuerung eines Torantriebes integrieren, beispielsweise zum Erzeugen einer entsprechenden Fehlermeldung bei Federdefekt.

Gemäß einer vorteilhaften Ausgestaltung der Erfindung ist eine Überwachungsvorrichtung vorgesehen, die die zum Öffnen und Schließen benötigte Antriebskraft vergleicht und das Ergebnis anschließend mit einem Toleranzwert vergleicht. Auf diese Weise kann man einen Defekt in der Gewichtsausgleicheinrichtung detektieren.

Bevorzugt ist eine Überwachungsvorrichtung zur Überwachung einer Gewichtsausgleicheinrichtung zur Unterstützung des Öffnens oder Schließens einer Gebäudeabschlusseinrichtung, wobei die Überwachungsvorrichtung eine Erfassungseinrichtung zum Erfassen der zum Öffnen und Schließen der Gebäudeabschlusseinrichtung benötigten Kraft und eine Vergleichseinrichtung zum Vergleichen des Unterschieds zwischen der zum Öffnen und Schließen der Gebäudeabschlusseinrichtung benötigten Kraft mit einem Vergleichswert aufweist.

In einer vorteilhaften Ausgestaltung der Erfindung weist die Überwachungsvorrichtung eine Erfassungseinrichtung zur Bildung der Differenz zwischen der zum Öffnen und Schließen benötigten Antriebskraft an mehreren, jeweils gleichen Stellungen des Gebäudeabschlusselements, die durch einen Wegstreckenszähler bestimmt werden, auf. Vorzugsweise wird die Differenz an den Stellungen, an denen eine minimale und eine maximale Antriebskraft zum Öffnen und Schließen des Tores benötigt wird, mittels einer Extremwertbestimmungseinrichtung bestimmt. Im Anschluss werden in einer Verarbeitungseinrichtung die Differenzen mit Hilfe eines Komparators mit einem Vergleichswert verglichen, der von einem Vergleichswertgeber erzeugt wird und an die Gewichtsausgleicheinrichtung angepasst ist. Weiter vorzugsweise bildet ein zweiter Komparator die Differenz zwischen den Differenzen und dem Vergleichswert. Ist diese zweite, in einer Vergleichseinrichtung bestimmte Differenz größer als Null, so schaltet die Vergleichseinrichtung ein Signal für den störungsfreien Betrieb der Gebäudeabschlusseinrichtung, was einem Betrieb der Gebäudeabschlusseinrichtung mit einer funktionsfähigen Gewichtsausgleicheinrichtung entspricht. Ist der in der Vergleichseinrichtung bestimmte Wert jedoch kleiner als Null, schaltet die Vergleichseinrichtung eine Fehlerfunktionsanzeige, was ein Anzeichen dafür ist, dass zumindest ein Teil der Gewichtsausgleicheinrichtung defekt ist.

Die Gewichtsausgleicheinrichtung ist in einer bevorzugten Ausgestaltung ein Mehrfachzugfederpaket, das mindestens ein Zugfederpaket mit mehreren Federn aufweist. Vorzugsweise umfasst ein Zugfederpaket eine innere und eine äußere Zugfeder, die koaxial angeordnet sind und gegenläufig gewickelt sind. Die Überwachungsvorrichtung detektiert den Defekt mindestens einer dieser Zugfedern.

Die Gebäudeabschlusseinrichtung kann beispielsweise ein Sektionaltor, ein Rolltor oder ein Schwingtor sein. Im Falle eines Schwingtores unterstützt die Gewichtsausgleicheinrichtung beispielsweise das Öffnen oder Schließen des Schwingtores über einen Hebel. Im Falle eines Rolltores greift die Gewichtsausgleicheinrichtung z.B. über ein Zugmittel an eine Wickeltrommel an, die an die Wickelwelle des Behanges montiert ist.

Die Antriebseinrichtung zum Öffnen und Schließen der Gebäudeabschlusseinrichtung umfasst vorzugsweise einen Motor und ein Getriebe, das an die Abmessungen und an das Gewicht des Gebäudeabschlusselements angepasst ist.

In einer bevorzugten Ausgestaltung wird die zum Öffnen und Schließen der Gebäudeabschlusseinrichtung benötigte Antriebskraft über einen Betriebsparameter bestimmt, der direkt oder indirekt proportional zur Antriebskraft ist. Weiter vorzugsweise wird zur Bestimmung der Antriebskraft eine Leistungsmesseinrichtung verwendet, die die Motorleistung misst. Die Leistungsmesseinrichtung umfasst beispielsweise ein Strommessgerät zur Messung der im Stromkreis des Elektromotors fließenden Stromstärke, ein Spannungsmessgerät zur Messung der am Elektromotor abfallenden Spannung und ein Multiplier, der die beiden Betriebsparameter des Elektromotors multipliziert. Die so am Multiplier gewonnene Motorleistung und die Stellung des Gebäudeabschlusselements werden weiter vorzugsweise an die Überwachungsvorrichtung übermittelt. Die Stellung des Gebäudeabschlusselements wird vorzugsweise durch einen Wegstreckenzähler bestimmt.

Im Folgenden werden weitere vorteilhafte Ausgestaltungen der Überwachungsvorrichtung und der damit durchführbaren Überwachungsverfahren beschrieben.

Weiter vorzugsweise wird mit Hilfe einer Extremwertbestimmungseinrichtung die nach dem Öffnen oder Schließen des Gebäudeabschlusselements benötigte minimale und maximale Antriebskraft bestimmt. Optional werden auch die Stellungen (oder Zeiten) beim Auftreffen dieser Extremwerte bestimmt. Diese Werte werden dann in einen Zwischenspeicher abgelegt. Bei der nächsten Fahrt des Gebäudeabschlusselements werden wieder die minimale und maximale Antriebskraft ermittelt. Anschließend werden die minimale und maximale Antriebskraft mit den Werten der vorherigen Fahrt des Gebäudeabschlusselements in einem ersten Komparator durch Differenzbildung verglichen. Der in einer Betragswerteinrichtung bestimmte Betragswert dieser Werte wird dann vorzugsweise in einem zweiten Komparator von einem von einem Vergleichswertgeber erzeugten Vergleichswert abgezogen, der an die Zugfeder der Zugfederpakete mit der geringsten Spannkraft angepasst ist. Eine Vergleichseinrichtung überprüft, ob die ermittelte Differenz größer oder kleiner Null ist. Ist die Differenz größer Null, so schaltet eine Vergleichseinrichtung ein Signal für den störungsfreien Betrieb. Ist die Differenz jedoch kleiner Null (eventuell unter Berücksichtigung eines Toleranzwerts), so schaltet die Vergleichseinrichtung eine Fehlfunktionsanzeige, die den Defekt wenigstens einer Zugfeder signalisiert.

Ein Vorteil der vorliegenden Erfindung ist, dass die Überwachungsvorrichtung keine Vergleichskurve benötigt, die während einer störungsfreien Fahrt aufgenommen wurde. Dies eliminiert zum einen fehlerhafte Störungsmeldungen, die durch Schwankungen in der Antriebskraft hervorgerufen werden, wie zum Beispiel Wind oder kaltes Wetter, das die benötigte Antriebskraft variieren lässt. Zum anderen ist es zum störungsfreien Betrieb der vorliegenden Überwachungsvorrichtung nicht nötig, routinemäßig eine Vergleichskurve aufzunehmen, da nur zwischen den Kurven während des Öffnens und Schließens verglichen wird. Dies erübrigt Wartungsarbeiten an der Überwachungsvorrichtung, was der erfindungsmäßigen Überwachungsvorrichtung einen Kostenvorteil für den Betrieb beschert.

Gemäß einer weiteren vorteilhaften Ausgestaltung der Erfindung weist die Überwachungsvorrichtung alternative Bauteile auf, die die gesamte benötigte Antriebskraft zum Öffnen und Schließen der Gebäudeabschlusseinrichtung aufnehmen und miteinander vergleichen. Dies kann beispielsweise realisiert werden, dass an Stelle der Extremwertbestimmungseinrichtung eine Integrationseinrichtung zur Integration über die benötigte Antriebskraft eingebaut wird. Alle anderen Komponenten der Überwachungsanlage werden in dieser Ausführungsform wie oben beschrieben verwendet. Ist ein Teil der Gewichtsausgleicheinrichtung defekt, ist die gesamte benötigte Antriebskraft zum Öffnen signifikant größer als die gesamte benötigte Kraft zum Schließen der Gebäudeabschlusseinrichtung. Dies wird dann von einer Vergleichseinrichtung als ein Anzeichen dafür gewertet, dass ein Teil der Gewichtausgleicheinrichtung defekt ist.

Ausführungsbeispiele der Erfindung werden nachfolgend anhand der beigefügten Zeichnung näher erläutert. Darin zeigt:
- Fig. 1: eine Innenansicht auf ein Rolltor mit Antrieb und Gewichtsausgleicheinrichtung
- Fig. 2: eine perspektivische Ansicht eines Wellentorantriebs mit Motoreinheit, Wickelwelle und Übertragungsgetriebe zwischen Motoreinheit und Wickelwelle
- Fig. 3: Explosionsdarstellung dreier Ausgestaltungen eines Zugfederpakets mit jeweils einer oder mehreren Federeinheiten, die koaxiale Zugfedern aufweisen
- Fig. 4: Graph, der den Verlauf der Antriebskraft A über die Stellung des Rolltors x darstellt
- Fig. 5: Schaltungsbild der Antriebseinrichtung
- Fig. 6: Funktionsdarstellung der Überwachungsvorrichtung
- Fig. 7: weitere Ausführungsform einer Gebäudeabschlusseinrichtung

Im Folgenden wird anhand der Figuren eine Überwachungsvorrichtung 190 zur Überwachung einer Gewichtsausgleicheinrichtung 120 anhand bevorzugter Ausführungsformen einer Gebäudeabschlusseinrichtung 102 beispielhaft dargestellt.

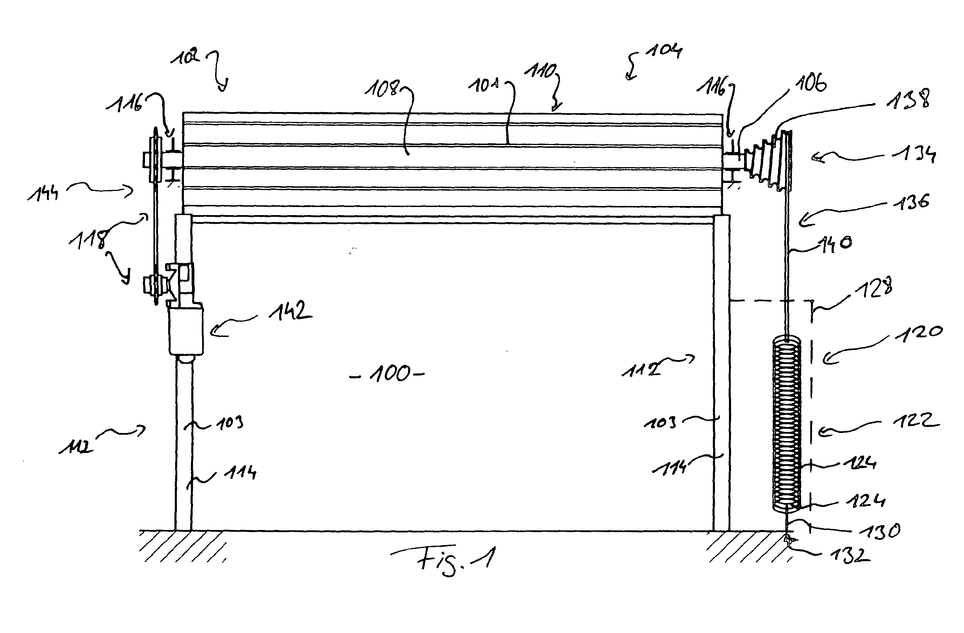

Fig. 1 zeigt eine Gebäudeöffnung 100, die mit einer Gebäudeabschlusseinrichtung 102 abgeschlossen wird, die ein bewegliches Gebäudeabschlusselement 101, eine Gebäudeabschlusselementführung 103 zur Führung des beweglichen Gebäudeabschlusselement 101, eine Antriebseinrichtung 118 und eine Gewichtsausgleicheinrichtung 120 aufweist.

In der Fig. 1 gezeigten, bevorzugten Ausgestaltung der Gebäudeabschlusseinrichtung 102 ist das bewegliche Gebäudeabschlusselement 101 ein Rolltor 104. Das Rolltor 104 weist eine Wickelwelle 106, einen auf die Wickelwelle 106 zu einem Torballen 108 aufwickelbaren Behang 110 und eine Zarge 112 auf. Die Wickelwelle 106 weist zudem eine Getriebeeinrichtung 134 und an dem gegenüberliegenden Ende eine Antriebseinrichtung 118 auf.

Das Gebäudeabschlusselementführung 103, die Zarge 112, ist als ortsfestes Rahmenelement an der Berandung der Gebäudeöffnung 100 befestigt und weist jeweils links und rechts der Gebäudeöffnung 100 je eine Führung 114 für den Behang 110 auf. An jeder Zarge 112 ist ein Lager 116 für die Wickelwelle 106 vorgesehen.

An einem ersten Ende der Wickelwelle 106 greift eine Antriebseinrichtung 118 an. An einem zweiten Ende der Wickelwelle 106 greift eine Gewichtsausgleicheinrichtung 120 an.

Die Gewichtsausgleicheinrichtung 120 weist ein Zugfederpaket 122 auf, das wenigstens eine innere Zugfeder 124 und eine äußere Zugfeder 126 umfasst. Die innere Zugfeder 124 ist innerhalb der äußeren Zugfeder 126 konzentrisch so aufgenommen, dass die Zugfedern 124, 126 verschachtelt zueinander angeordnet sind, wobei die Zugfedern 124, 126, wie das nicht näher dargestellt ist, gegenläufig gewickelt sind. Das Zugfederpaket 122 ist in einer Zugfederpaketabdeckung 128 aufgenommen, um das Zugfederpaket 122 gegen den Zugriff von Personen zu schützen.

Ein erstes Ende des Zugfederpakets 122 ist über einen Federsitz 130 mit dem Zughaken 132 an einem ortsfesten Bereich der Zarge 112 eingehakt. Ein zweites Ende des Zugfederpakets 122 ist mit einer Getriebeeinrichtung 134 verbunden, mittels der die Zugkraft des Zugfederpakets 122 auf die Wickelwelle 106 übertragen wird. Die Getriebeeinrichtung 134 ist derart ausgebildet, dass das durch die Zugkraft des Zugfederpakets 122 verursachte Drehmoment von der Stellung der Wickelwelle 106 abhängig ist, wobei dadurch das von dem Behang 110 verursachte, sich ändernde Drehmoment kompensiert werden soll, so dass das von der Antriebseinrichtung 118 erbrachte Drehmoment zum Öffnen oder Schließen des Rolltors 104 weitestgehend konstant ist.

In dem dargestellten Beispiel weist die Getriebeeinrichtung 134 ein Zugmittel 136 und eine Wickeltrommel 138 mit drehwinkelabhängigen und somit torwegabhängigen Wickelradius auf. Das Zugmittel 136 weist zwei Drahtseile 140 auf.

Die Antriebseinrichtung 118 weist einen Motor 142 auf, dessen Antriebskraft mittels eines Übertragungsgetriebes 144 auf die Wickelwelle 106 übertragen wird.

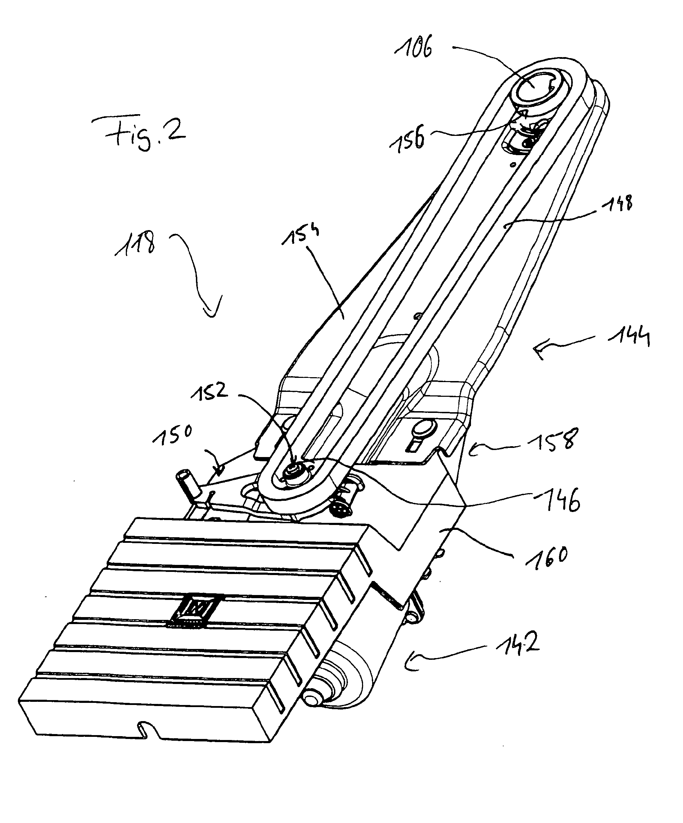

Fig. 2 zeigt die Antriebseinrichtung 118, die einen Motor 142, ein Übertragungsgetriebe 144, eine Antriebswelle 146 und eine Wickelwelle 106 aufweist. Das Drehmoment der Antriebswelle 146 wird auf die Wickelwelle 106 mittels eines Getriebezugmittels 148 übertragen. Die Antriebseinrichtung 118 ist als Getriebemotor ausgebildet und weist ein Schneckengetriebe zur Übertragung des Drehmoments des Motors 142 auf die Antriebswelle 146 auf, das hier nicht näher abgebildet ist. Mittels einer Entkupplungseinrichtung 150 ist das erste Kettenritzel 152 von dem Schneckengetriebe für Notabschaltungen entkuppelbar, so dass das erste Kettenritzel 152 im entkuppelten Zustand sich frei drehen kann.

Die Abmessungen der Abstandsplatte 154, die den Abstand zwischen der Antriebswelle 152 und der Wickelwelle 106 bestimmt, kann an die Abmessungen des Rolltores 104 angepasst werden. Genauso kann der Umfang des zweiten Kettenritzels 156 an das Verhältnis zwischen der Zugkraft des Motors 152 und des Gewichts des Behangs 110 angepasst werden. Dies wird dadurch bewerkstelligt, dass eine passende Ausführung der Abstandsplatte 154 mittels der Befestigungsschnittstelle 158 an die Motorplatte 160 befestigt wird, an der derselbe Motor 152 und dieselbe Antriebswelle 152 montiert sind.

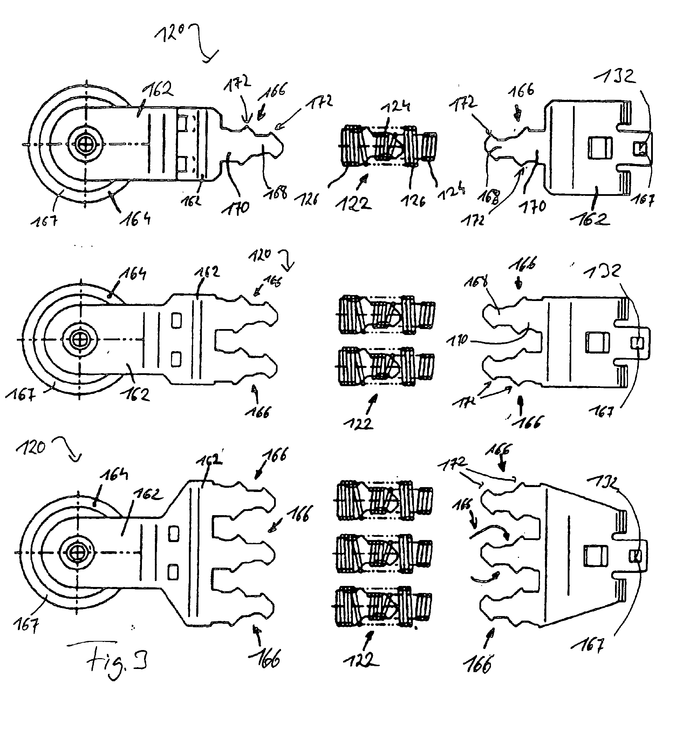

Fig. 3 zeigt verschiedene Ausführungen der Gewichtsausgleicheinrichtung 120, die eine oder mehrere Zugfederpakete 122, Federpaketträger 162, Federhalterelemente 166 und Befestigungseinrichtungen 167 aufweisen.

Für jedes Zugfederpaket 122 ist eine innere Zugfeder und eine äußere Zugfeder vorgesehen, die koaxial angeordnet sind. Wie bereits erwähnt, sind die Zugfedern 124, 126 gegenläufig gewickelt, um, wenn eine der Zugfedern 124, 126 bricht, ein Ausschleudern von Federbruchteilen zu vermeiden. Der Innendurchmesser der äußeren Feder 126 ist größer als der Außendurchmesser der Innenfeder 124, so dass sich die beiden Federn 124, 126 unabhängig voneinander bewegen können. Dadurch gelingt es, auf geringem Raum ein hohes Kraftspeichervermögen unterzubringen.

Die ein, zwei oder drei Federpakete 122 werden über Federpaketträger 162 mit Hilfe von Befestigungseinrichtungen 167 eingespannt. Die Befestigungseinrichtungen 167 können als Federpaketrolle 164, an der das Zugmittel 136 angreift, oder als Zughaken 132 ausgebildet sein. Entsprechend der Anzahl der Zugfederpakete 122 gibt es eine entsprechende Anzahl von Federhalterelementen 166. Wie die Seitenansicht in Fig. 3 zeigt, umfasst das Federhalterelement 166 einen schmaleren Halteabschnitt 168 und einen breiteren Halteabschnitt 170. Die innere Zugfeder 124 wird auf den schmaleren Halteabschnitt 168 aufgeschoben und anschließend durch die widerhakenförmigen Vorsprünge 172 festgehalten. Analog dazu werden die äußeren Zugfedern 126 auf den breiteren Halteabschnitt 170 aufgeschoben und ebenfalls durch widerhakenförmige Vorsprünge 172 festgehalten.

In dem Antrieb wird ein von der Antriebskraft A abhängiger Antriebsparameter oder Betriebsparameter, wie z.B. die Leistung, die Stromaufnahme oder die Drehzahl beim Öffnen und beim Schließen überwacht.

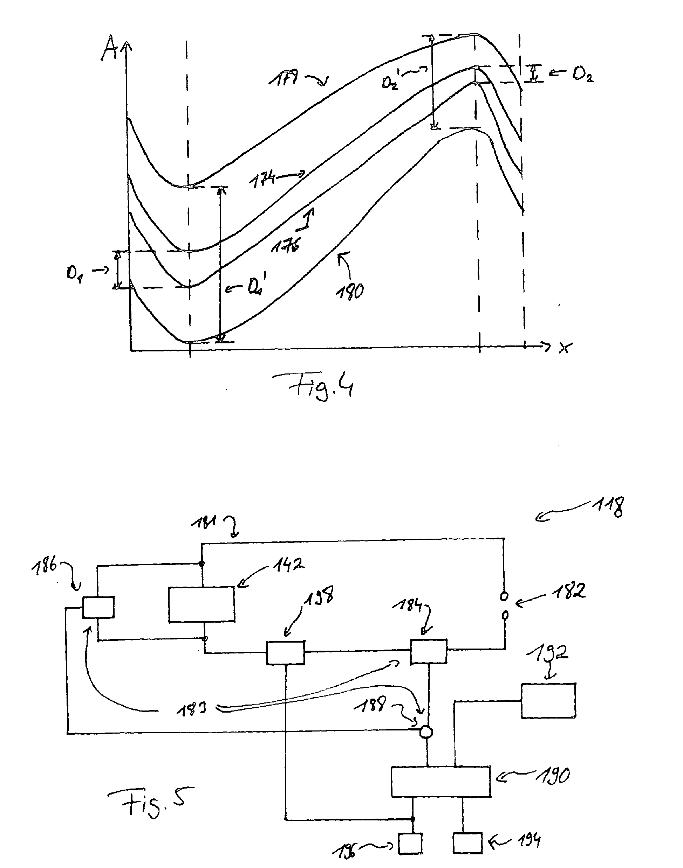

Fig. 4 zeigt die Antriebskraft A beim Öffnen oder Schließen mit funktionierender 174, 176 und defekter 178, 180 Gewichtsausgleicheinrichtung 120 als Graphen über der Stellung x des Rolltors 104.

Die Antriebskraft 174 zum Öffnen des Rolltors mit funktionierender Gewichtsausgleicheinrichtung 120 zeigt einen nicht linearen, monotonen Verlauf, der unter anderem durch die Nichtlinearität der Gewichtsausgleicheinrichtung 120, durch das sich ändernde Gewicht des Behangs 110 und durch die sich ändernde Übersetzung der Getriebeeinrichtung 134 begründet ist. Auf Grund der Gewichtsausgleicheinrichtung 120 ist die Differenz zwischen der Antriebskraft während des Schließens 176 und des Öffnens 174 über den ganzen Verlauf des Öffnens und Schließens gering.

In einer bevorzugten Ausführungsform der als Teil einer Steuerungssoftware für den Antrieb implementierten Überwachungsvorrichtung werden die Differenzen D₁, D₂ zwischen der Antriebskraft während des Öffnens und Schließens des Rolltors 104 an der Stelle mit minimaler Antriebskraft D₁ und an der Stelle mit maximaler Antriebskraft D₂ bestimmt. Bei einem Defekt der Gewichtsausgleicheinrichtung 120, beispielsweise einem Brechen einer Zugfeder 124, 126, erhöht sich die benötigte Antriebskraft zum Öffnen 178 des Rolltors 104 erheblich. Demgegenüber verringert sich die benötigte Antriebskraft zum Schließen 180 des Rolltores 104 bei defekter Gewichtsausgleicheinrichtung 120 deutlich. Dies erkennt man durch einen Vergleich der Differenzen bei minimaler Antriebskraft D₁, D₁' und maximaler Antriebskraft D₂, D₂' bei jeweils funktionierender und defekter Gewichtsausgleicheinrichtung 120. Ist die Differenz zwischen D₁' und D₁ größer als ein Vergleichswert und die Differenz zwischen D₂' und D₂ ebenfalls größer als ein Vergleichswert, ist dies ein Indiz für den Defekt einer der Zugfedern 124, 126.

Das Schaltbild der Antriebseinrichtung 118, das in Fig. 5 dargestellt ist, weist einen Motorstromkreis 181, eine Leistungsmesseinrichtung 183 zur Messung der Antriebskraft des Motors 142, die Überwachungsvorrichtung 190 und einen Wegstreckenzähler 192 auf. Die Leistungsmesseinrichtung 183 ist Teil eines Ausführungsbeispiels einer Erfassungseinrichtung 199 zum Erfassen des Öffnungskraftparameters, der die Kraft beim Öffnen anzeigt und zum Erfassen eines Schließkraftparameters, der die Kraft beim Schließen anzeigt.

Der Motorstromkreis 181 weist einen Motor 142, eine Spannungsquelle 182 und eine Unterbrechungseinrichtung auf. Die Leistungsmesseinrichtung 183 weist eine Stromquelle 182 und eine Leistungsmesseinrichtung 183 auf, die einen Strommesser 184, ein Spannungsmessgerät 186 und einen Multiplier 188 umfasst. Die Stromstärke im Motorstromkreis 181 wird mittels des Strommessers 184 und der Spannungsabfall am Motor 142 wird mittels des Spannungsmessgeräts 186 gemessen. Die gemessene Stromstärke und -spannung werden am Multiplier 188 multipliziert. Das erhaltene Signal ist die Leistung des Motors 142 und ist direkt proportional zur zum Öffnen und Schließen des Rolltors 104 benötigten Antriebskraft. Die Motorleistung wird zusammen mit der Stellung des Rolltors 104 der Überwachungsvorrichtung 190 zugeführt. Die Stellung des Rolltors 104 wird mittels eines Wegstreckenzählers 192 bestimmt, der die absolute Position des Rolltors 104 misst und nicht näher dargestellt ist. Erkennt die Überwachungsvorrichtung 190, dass die Gewichtsausgleicheinrichtung 120 nicht defekt ist, so schaltet sie ein Signal für den störungsfreien Betrieb 194 ein. Detektiert die Überwachungsvorrichtung 190 jedoch, dass eine der Zugfedern 124, 126 der Gewichtsausgleicheinrichtung 120 defekt ist, dann schaltet sie eine Fehlfunktionsanzeige 196 ein. Zudem kann in einer anderen Ausführungsform der Erfindung im Falle eines Defekts der Gewichtsausgleicheinrichtung 120 eine Unterbrechungseinrichtung 198 eingeschaltet werden, die den Stromkreis des Elektromotors nach dem vollständigen Schließen oder Öffnen des Rolltors 104 unterbricht.

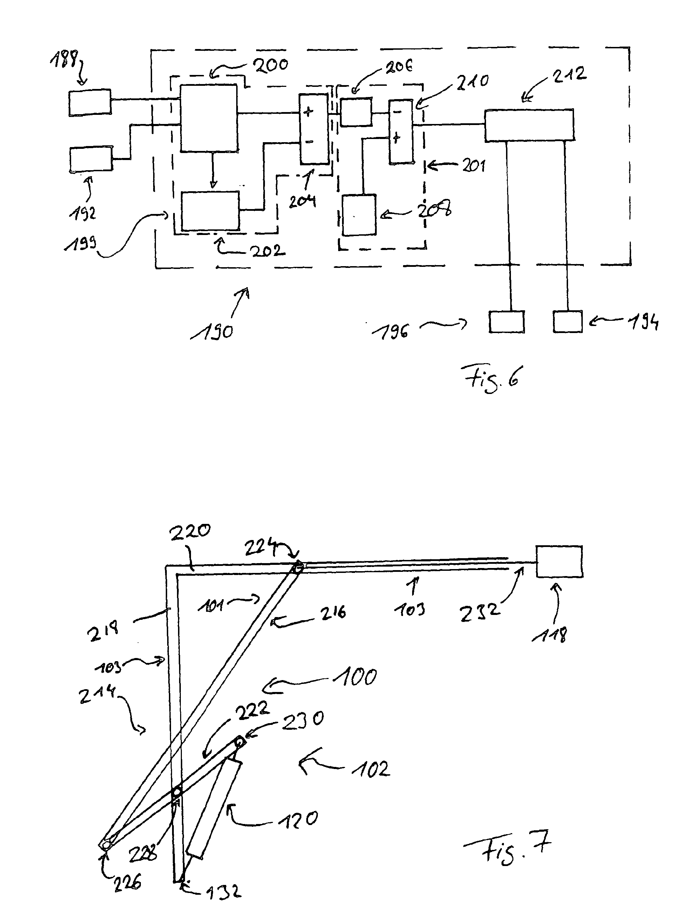

Fig. 6 zeigt die Funktionsweise der Überwachungsvorrichtung 190, die eine Erfassungseinrichtung 199, eine Verarbeitungseinrichtung 201 und eine Vergleichseinrichtung 212 umfasst.

Die Erfassungseinrichtung 199 weist neben der Leistungsmesseinrichtung 183 eine Extremwertbestimmungseinrichtung 200, einen Zwischenspeicher 202 und einen ersten Komparator 204 auf. Die Verarbeitungseinrichtung 201 weist ein Betragwertbauteil 206, einen zweiten Komparator 210 und Vergleichswertgeber 208 auf.

Die Signale des Multipliers 188 und des Wegstreckenzählers 192 werden der Extremwertbestimmungseinrichtung 200 zugeführt. Diese bestimmt die minimale und maximale Leistung bei dem Öffnen bzw. Schließen. Der Wert der minimalen und maximalen Antriebsleistung wird im Zwischenspeicher 202 abgelegt. Nach einem weiteren Schließ- oder Öffnungsvorgang des Rolltors 104 ermittelt die Extremwertbestimmungseinrichtung 200 wieder den minimalen und maximalen Wert der Antriebsleistung. Die minimale und maximale Antriebsleistung aus der Extremwertbestimmungseinrichtung 200 werden zusammen mit den in dem Zwischenspeicher 202 abgelegten minimalen und maximalen Werten des vorhergehenden Öffnungs- bzw. Schließvorgangs einem ersten Komparator 204 zugeführt, der die Differenz der beiden maximalen und beiden minimalen Antriebsleistungen bildet.

In der Vergleichseinrichtung 201 wird der Betrag der beiden Werte im Betragswertbauteil 206 gebildet. Anschließend werden die beiden Werte zusammen mit einem Vergleichswert aus dem Vergleichswertgeber 208 einem zweiten Komparator 210 zugeführt. Der Vergleichswert wird einmalig nach Installation des Rolltors 104 an die Federhärten der Zugfedern 124, 126 angepasst. Im zweiten Komparator 210 wird die Differenz zwischen der minimalen bzw. maximalen Antriebsleistung und dem Vergleichswert gebildet.

Die beiden Differenzen werden einer Vergleichseinrichtung 212 zugeführt. Die Vergleichseinrichtung 212 überprüft, ob die beiden Differenzwerte größer oder kleiner Null sind. Ist der Wert größer als Null, so ist dies ein Anzeichen dafür, dass die Gewichtsausgleicheinrichtung 120 nicht defekt ist, da der Vergleichswert im positiven Kanal des zweiten Komparators 210 und die Differenz der Extremwerte der Antriebsleistung im negativen Kanal des zweiten Komparators 210 eingeführt wurde. Die Vergleichseinrichtung 212 schaltet dann das Signal für einen störungsfreien Betrieb 194. Im Falle eines Wertes kleiner Null schaltet die Vergleichseinrichtung 212 die Fehlfunktionsanzeige 196.

Fig. 7 zeigt eine weitere Ausführungsform einer Gebäudeabschlusseinrichtung 102, ein Schwingtor 214, das analog zu Fig. 1 ein bewegliches Gebäudeabschlusselement 101, eine Gebäudeabschlusselementführung 103 zur Führung des beweglichen Gebäudeabschlusselement 101, eine Antriebseinrichtung 118 und eine Gewichtsausgleicheinrichtung 120 aufweist.

Das bewegliche Gebäudeabschlusselement 101 des Schwingtors 214 ist ein Torblatt 216. Die Gebäudeabschlusselementführung 103 weist eine vertikale Stütze 218, eine horizontale Führung 220 und einen Hebelarm 222 auf. Das Torblatt 216 wird am oberen vertikalen Ende in der Führung mittels einer Laufrolle 224 gehalten, während das untere vertikale Ende des Torblatts 216 mit Hilfe eines ersten Hebellagers 226 am Hebelarm 222 gehalten wird. Der Hebelarm 222 wiederum ist drehbar an der vertikalen Stütze 218 mittels eines zweiten Hebellagers 228 befestigt. An der gegenüberliegenden Seite des Hebelarms 222 greift die Gewichtsausgleicheinrichtung 120 über ein drittes Hebellager 230 am Hebelarm 222 an. Das Gewicht des Torblatts 216 erzeugt am Hebelarm 222 um das zweite Hebellager 228 ein Drehmoment, das die entgegen gesetzte Richtung als das Drehmoment hat, das von der Gewichtsausgleicheinrichtung 120 erzeugt wird. Die Gewichtsausgleicheinrichtung 120 ist mit Hilfe eines Zughakens 132 an der vertikalen Stütze 218 befestigt. In dieser Anordnung des Hebelarms 222 wird das Öffnen des Torblatts 216 durch die Gewichtsausgleicheinrichtung 120 unterstützt. Das Öffnen und Schließen des Torblatts 216 wird durch eine Antriebseinrichtung 118 durchgeführt, die über ein Schwingtorzugmittel 232 das Schwingtor 214 öffnet oder schließt.

Einige interessante Aspekte der vorbeschriebenen Neuerung werden im Folgenden noch einmal zusammengefasst.

Die Neuerung betrifft insbesondere eine Überwachungsvorrichtung (190) zur Überwachung einer Gewichtsausgleichseinrichtung (120) zur Unterstützung des Öffnens oder Schließens einer Gebäudeabschlusseinrichtung (102), wobei die Überwachungsvorrichtung (190) eine Erfassungseinrichtung (199) zum Erfassen der zum Öffnen und Schließen der Gebäudeabschlusseinrichtung (102) benötigten Kraft und eine Vergleichseinrichtung (212) zum Vergleichen des Unterschieds zwischen der zum Öffnen und Schließen der Gebäudeabschlusseinrichtung (102) benötigten Kraft mit einem Vergleichswert aufweist.

Es ist wünschenswert, dass das Versagen einer Gewichtsausgleichseinrichtung (120) bei Gebäudeabschlusseinrichtungen (102), wie beispielsweise Roll- und Schwingtore, deutlich sichtbar beziehungsweise wahrnehmbar ist. Bei Gewichtsausgleichseinrichtungen (120) wie zum Beispiel mit Zugfederpaketen (122) ist dies nicht immer offensichtlich, zum Beispiel beim Bruch einer Zugfeder (124, 126) des Zugfederpakets (122). Die vorliegende Neuerung zeigt eine Überwachungsvorrichtung (190), die größere Sicherheiten beim Betrieb angetriebener Gebäudeabschlüsse bietet, keine routinemäßige Wartung erfordert und somit kostengünstig betrieben werden kann.

### Bezugszeichenliste:

- 100: Gebäudeöffnung
- 101: Gebäudeabschlusselement
- 102: Gebäudeabschlusseinrichtung
- 103: Gebäudeabschlusselementführung
- 104: Rolltor
- 106: Wickelwelle
- 108: Torballen
- 110: Behang
- 112: Zarge
- 114: Führung
- 116: Lager
- 118: Antriebseinrichtung
- 120: Gewichtsausgleicheinrichtung
- 122: Zugfederpaket
- 124: innere Zugfeder
- 126: äußere Zugfeder
- 128: Zugfederpaketabdeckung
- 130: Federsitz
- 132: Zughacken
- 134: Getriebeeinrichtung
- 136: Zugmittel
- 138: Wickeltrommel
- 140: Drahtseile
- 142: Motor
- 144: Übertragungsgetriebe
- 146: Antriebswelle
- 148: Getriebezugmittel
- 150: Entkupplungseinrichtung
- 152: erstes Kettenritzel
- 154: Abstandsplatte
- 156: zweites Ketteritzel
- 158: Befestigungsschnittstelle
- 160: Motorplatte
- 162: Federpaketträger
- 164: Federpaketrolle
- 166: Federhalterelement
- 167: Befestigungseinrichtung
- 168: schmaler Halteabschnitt
- 170: breiter Halteabschnitt
- 172: widerhackenförm iger Vorsprung
- 174: Antriebskraft zum Öffnen des Rolltors mit funktionierender Gewichtsausgleicheinrichtung
- 176: Antriebskraft zum Schließen des Rolltors mit funktionierender Gewichtsausgleicheinrichtung
- 178: Antriebskraft zum Öffnen des Rolltors mit defekter Gewichtsausgleicheinrichtung
- 180: Antriebskraft zum Schließen des Rolltors mit defektem Gewichtsausgleicheinrichtung
- 181: Motorstromkreislauf
- 182: Stromquelle
- 183: Leistungsmesseinrichtung
- 184: Strommessgerät
- 186: Spannungsmessgerät
- 188: Multiplier
- 190: Überwachungsvorrichtung
- 192: Wegstreckenzähler
- 194: Signal für störungsfreien Betrieb
- 196: Fehlfunktionsanzeige
- 198: Unterbrechungseinrichtung
- 199: Erfassungseinrichtung
- 200: Extremwertbestimmeinrichtung
- 201: Verarbeitungseinrichtung
- 202: Zwischenspeicher
- 204: erster Komparator
- 206: Betragswertbauteil
- 208: Vergleichswertgeber
- 210: zweiter Komparator
- 212: Vergleichseinrichtung
- 214: Schwingtor
- 216: Torblatt
- 218: vertikale Stütze
- 220: horizontale Führung
- 222: Hebelarm
- 224: Laufrolle
- 226: erstes Hebellager
- 228: zweites Hebellager
- 230: drittes Hebellager
- 232: Schwingtorzugmittel

- A: Antriebskraft
- D₁: Differenz der Antriebskraft zwischen Öffnen und Schließen des Rolltors an der Rolltorstellung mit minimaler Antriebskraft bei funktionierender Gewichtsausgleicheinrichtung
- D₂: Differenz der Antriebskraft zwischen Öffnen und Schließen des Rolltors an der Rolltorstellung mit maximaler Antriebskraft bei funktionierender Gewichtsausgleicheinrichtung
- D₁': Differenz der Antriebskraft zwischen Öffnen und Schließen des Rolltors an der Rolltorstellung mit minimaler Antriebskraft bei defekter Gewichtsausgleicheinrichtung
- D₂': Differenz der Antriebskraft zwischen Öffnen und Schließen des Rolltors an der Rolltorstellung mit maximaler Antriebskraft bei defekter Gewichtsausgleicheinrichtung
- x: Stellung des Rolltors

## Patentansprüche

1. Überwachungsvorrichtung (190) zur Überwachung einer Gewichtsausgleichseinrichtung (120) einer Gebäudeabschlusseinrichtung (102), mit:
einer Erfassungseinrichtung (199) zum Erfassen eines von der zum Öffnen der Gebäudeabschlusseinrichtung (102) benötigten Öffnungskraft abhängigen Öffnungskraftparameters und zum Erfassen eines von der zum Schließen der Gebäudeabschlusseinrichtung (120) benötigten Schließkraft abhängigen Schließkraftparameters und
einer Verarbeitungseinrichtung zum Überwachen des Zustands der Gewichtsausgleichseinrichtung anhand des Öffnungskraftparameters und des Schließkraftparameters,
**gekennzeichnet durch**,
eine zum Erhalten eines Unterschiedswerts zwischen Öffnungskraft und Schließkraft aus Öffnungskraftparameter und Schließkraftparameter ausgebildete Differenzwerteinrichtung, und
eine zum Vergleichen dieses Unterschiedswerts zwischen Öffnungskraft und Schließkraft mit einem vorgegebenen Unterschieds-Vergleichswert ausgebildete Vergleichseinrichtung.

2. Überwachungsvorrichtung nach Anspruch 1,
**dadurch gekennzeichnet,**
**dass** sie zum Erfassen eines Ausfalls eines von mehreren Kraftspeicherelementen der Gewichtsausgleichseinrichtung, insbesondere einer Feder eines Federpakets der Gewichtsausgleichseinrichtung oder einer Feder einer Mehrfachfedereinrichtung der Gewichtsausgleichseinrichtung, ausgebildet ist.

3. Überwachungsvorrichtung nach einem der voranstehenden Ansprüche,
**dadurch gekennzeichnet,**
**dass** eine Warneinrichtung zum Abgeben einer Warnung bei Auftreten einer nachlassenden Wirkung der Gewichtsausgleichseinrichtung vorgesehen ist.

4. Überwachungsvorrichtung nach Anspruch 2 und nach Anspruch 3,
**dadurch gekennzeichnet,**
**dass** die Warneinrichtung zum Abgeben eines Warnsignals bei Ausfall eines von mehreren Kraftspeicherelementen, wie insbesondere Federn, der Gewichtsausgleichseinrichtung ausgebildet ist.

5. Überwachungsvorrichtung nach einem der voranstehenden Ansprüche,
**dadurch gekennzeichnet,**
**dass** sie einer Steuerung eines an einen Gebäudeabschluss anzuschließenden Gebäudeabschlussantriebs, insbesondere eines an ein Tor anzuschließenden Torantriebs, zugeordnet oder als Teil einer solches Steuerung ausgebildet ist.

6. Überwachungsvorrichtung nach einem der vorhergehenden Ansprüche,
**dadurch gekennzeichnet,**
**dass** die Differenzwerteinrichtung zur Bestimmung des Unterschieds der Parameterwerte des Öffnungskraftparameters und des Schließkraftparameters an jeweils denselben Stellungen der Gebäudeabschlusseinrichtung (102) während des Öffnens und Schließens ausgebildet ist.

7. Überwachungsvorrichtung nach einem der voranstehenden Ansprüche,
**dadurch gekennzeichnet,**
**dass** eine Extremwertbestimmungseinrichtung (202) zum Bestimmen wenigstens eines Extremwertes des Öffnungskraftparameters und des Schließkraftparameters vorgesehen ist und dass die Differenzwerteinrichtung zur Bestimmung des Unterschieds der Extremwerte des Öffnungskraftparameters und des Schließkraftparameters ausgebildet ist.

8. Gebäudeabschlusseinrichtung (102) mit einem mit eine Gewichtsausgleichseinrichtung versehenem Gebäudeabschluss und einer Überwachungsvorrichtung (190) nach einem der voranstehenden Ansprüche zum Überwachen der Gewichtsausgleichseinrichtung.

9. Gebäudeabschlusseinrichtung nach Anspruch 8,
**dadurch gekennzeichnet,**
**dass** die Gewichtsausgleichseinrichtung (120) mindestens eine Zugfeder (124, 126) aufweist und dass der Überwachungsvorrichtung (190) eine Fehlfunktionsanzeige (196) zur Anzeige eines Defekts wenigstens einer Zugfeder (124, 126) der Gewichtsausgleichseinrichtung (120) beigeordnet ist.

10. Gebäudeabschlusseinrichtung (102) nach einem der Ansprüche 8 oder 9,
**dadurch gekennzeichnet,**
**dass** eine Antriebtriebseinrichtung (118) mit einem Motor (142) zur Erzeugung der Antriebskraft zum Öffnen oder Schließen des Gebäudeabschlusses umfasst und dass die Erfassungseinrichtung die Öffnungs- und Schließkraftparameter anhand von Antriebsparametern wie Leistung, Strom und/oder Drehzahl erfasst.

11. Torantrieb zum Antreiben eines durch eine Gewichtsausgleichseinrichtung ausgeglichenen Tores, **gekennzeichnet durch** eine Überwachungsvorrichtung nach einem der Ansprüche 1 bis 7 zum Überwachen der Gewichtsausgleichseinrichtung.

12. Überwachungsverfahren zur Überwachung einer Gewichtsausgleichseinrichtung einer Gebäudeabschlusseinrichtung, mit den Schritten:
Erfassen eines von der zum Öffnen der Gebäudeabschlusseinrichtung benötigten Öffnungskraft abhängigen Öffnungskraftparameters und
Erfassen eines von der zum Schließen der Gebäudeabschlusseinrichtung benötigten Schließkraft abhängigen Schließkraftparameters und
Überwachen des Zustands der Gewichtsausgleichseinrichtung anhand des Öffnungskraftparameters und des Schließkraftparameters,
**gekennzeichnet durch** die Schritte:
Bilden eines Unterschiedswerts zwischen Öffnungskraftparameter und Schließkraftparameter und Überwachen dieses Unterschiedswerts.

13. Überwachungsverfahren nach Anspruch 12,
**dadurch gekennzeichnet,**
**dass** durch Vergleich der Öffnungskraft mit der Schließkraft ein Rückschluss auf den Zustand der Gewichtsausgleichseinrichtung gezogen wird, wobei ein mit der Kraft korrelierter Parameter, wie z.B. die Leistungsaufnahme, die Stromaufnahme oder die Drehzahl, eines Antriebsmotors überwacht und wenigstens ein Wert des Parameters bei einem Öffnen mit einem entsprechend erhaltenen Wert beim Schließen verglichen wird.

14. Überwachungsverfahren nach Anspruch 12 oder 13,
**dadurch gekennzeichnet,**
**dass** ein eine maximale Kraft im Öffnungsverlauf anzeigender Extremwert beim Öffnen mit einem eine maximale Kraft im Schließverlauf anzeigenden Extremwert beim Schließen verglichen wird, wobei dieser Vergleich zur Überwachung der Gewichtsausgleichseinrichtung herangezogen wird.

## Claims

1. Monitoring apparatus (190) for monitoring a weight balancing device (120) of a building closure device (102), comprising:
a detection device (199) for detecting an opening force parameter which is dependent on the opening force required for opening said building closure device (102), and for detecting a closing force parameter which is dependent on the closing force required for closing said building closure device (120), and
a processing device for monitoring a status of the weight balancing device using said opening force parameter and said closing force parameter, **characterized by** a differential value device configured to obtain a differential value between the opening force and the closing force from said opening force parameter and said closing force parameter, and
a comparator device configured to compare that differential value between opening force and closing force with a predetermined differential reference value.

2. Monitoring apparatus according to claim 1,
**characterized in that** it is configured to detect failure of one of a plurality of several energy storing elements of the weight balancing device, particularly of a spring of a spring pack of the weight balancing device or a spring of a multi-spring device of the weight balancing device.

3. Monitoring apparatus according to one of the preceding claims,
**characterized in that** there is provided an alarm device to give an alarm in the event of a decreasing effect of the weight balancing device.

4. Monitoring apparatus according to claim 2 and claim 3,
**characterized in that** the alarm device is configured to issue an alert signal in case of failure of one of a plurality of energy storing elements, particularly such as springs, of the weight balancing device.

5. Monitoring apparatus according to one of the preceding claims,
**characterized in that** it is associated with or formed as a part of a control unit of a door closure drive to be connected to a door closure, particularly of a door drive to be connected to a door.

6. Monitoring apparatus according to one of the preceding claims,
**characterized in that** the differential value device for determining the difference of parameter values of the opening force parameter and the closing force parameter is respectively formed at the same positions of the building closure device (102) during opening and closing.

7. Monitoring apparatus according to one of the preceding claims,
**characterized in that** there is provided an extreme value determination unit (202) for determining at least one extreme value of the opening force parameter and the closing force parameter and that the differential value device is configured to determine the difference of the extreme values of the opening force parameter and the closing force parameter.

8. Building closure device (102) comprising a building closure provided with a weight balancing device, and a monitoring apparatus (190) according to one of the preceding claims, for monitoring said weight balancing device.

9. Building closure device according to claim 8,
**characterized in that** the weight balancing device (120) includes at least one tension spring (124, 126) and that a malfunction indicator (196) for indicating a defect of at least one tension spring (124, 126) of the weight balancing device (120) is assigned to said monitoring apparatus (190).

10. Building closure device (102) according to one of the claims 8 or 9,
**characterized in that** it comprises a drive device (118) including a motor (142) for producing the driving power for opening or closing the building closure and that the detection device detects the opening and closing force parameters on the basis of drive parameters, such as power, electric current and/or rotational speed.

11. Door drive for driving a door balanced by a weight balancing device, **characterized by** a monitoring apparatus according to one of the claims 1 to 7, for monitoring said weight balancing device.

12. Method for monitoring a weight balancing device of a building closure device, comprising the steps of:
detecting an opening force parameter which is dependent on the opening force required for opening said building closure device,
detecting a closing force parameter which is dependent on the closing force required for closing said building closure device, and
monitoring the status of the weight balancing device on the basis of the opening force parameter and the closing force parameter,
**characterized by** the steps of:
forming a differential value between the opening force parameter and the closing force parameter, and
monitoring that differential value.

13. Monitoring method according to claim 12,
**characterized in that** the status of the weight balancing device is inferred from a comparison of said opening force with said closing force, wherein a parameter correlated with said force, such as for example the input power, the current consumption or the rotational speed of a driving motor is monitored and at least one value of the parameter during an opening operation is compared with a correspondingly obtained value during a closing operation.

14. Monitoring method according to claim 12 or 13,
**characterized in that** an extreme value that indicates a maximum force in the opening process during the opening operation is compared with an extreme value that indicates a maximum force in the closing process during the closing operation, wherein that comparison is used for monitoring the weight balancing device.

## Revendications

1. Dispositif de surveillance (190) d'un dispositif d'équilibrage de poids (120) d'un dispositif de fermeture de bâtiment (102) comprenant :
- un dispositif de détection (199) permettant de détecter un paramètre de force d'ouverture dépendant de la force d'ouverture nécessaire pour ouvrir le dispositif de fermeture du bâtiment (102) et de détecter un paramètre de force de fermeture dépendant de la force de fermeture nécessaire pour fermer le dispositif de fermeture du bâtiment (102), et
- un dispositif de traitement permettant de surveiller l'état du dispositif d'équilibrage de poids à l'aide du paramètre de force d'ouverture et du paramètre de force de fermeture, **caractérisé en ce qu'**il comprend :
- un dispositif de valeur de différence réalisé à partir du paramètre de force d'ouverture et du paramètre de force de fermeture pour maintenir une valeur de différence entre la force d'ouverture et la force de fermeture, et
- un dispositif de comparaison réalisé pour permettre de comparer cette valeur de différence entre la force d'ouverture et la force d'ouverture avec une valeur de comparaison de différence prédéfinie.

2. Dispositif de surveillance conforme à la revendication 1,
**caractérisé en ce qu'**
il est réalisé pour permettre de détecter un défaut d'un élément accumulateur de force parmi plusieurs éléments accumulateurs de force du dispositif d'équilibrage de poids, en particulier d'un ressort d'un groupe de ressorts du dispositif d'équilibrage de poids ou d'un ressort d'un dispositif à ressorts multiples du dispositif d'équilibrage de poids.

3. Dispositif de surveillance conforme à l'une des revendications précédentes,
**caractérisé en ce qu'**
il comprend un dispositif d'avertissement permettant de délivrer un avertissement en cas de dégradation de l'action du dispositif d'équilibrage de poids.

4. Dispositif de surveillance conforme à la revendication 2 et à la revendication 3,
**caractérisé en ce que**
le dispositif d'avertissement est réalisé pour délivrer un signal d'avertissement en cas de défaut d'un élément accumulateur de force parmi plusieurs éléments accumulateurs de force tels que par exemple des ressorts du dispositif d'équilibrage de poids.

5. Dispositif de surveillance conforme à l'une des revendications précédentes,
**caractérisé en ce qu'**
il est associé à une commande d'un système d'entraînement de fermeture du bâtiment se connectant à une fermeture du bâtiment, en particulier d'un système d'entraînement de portail se connectant à un portail ou est réalisé en tant que partie d'une telle commande.

6. Dispositif de surveillance conforme à l'une des revendications précédentes,
**caractérisé en ce que**
le dispositif de valeur de différence permettant de déterminer la différence des valeurs de paramètre du paramètre de force d'ouverture et du paramètre de force de fermeture est respectivement réalisé dans les mêmes positions du dispositif de fermeture du bâtiment (102) pendant l'ouverture et la fermeture.

7. Dispositif de surveillance conforme à l'une des revendications précédentes,
**caractérisé en ce qu'**
il comporte un dispositif de détermination de valeur extrême (202) pour permettre de déterminer au moins une valeur extrême du paramètre de force d'ouverture et du paramètre de force de fermeture, et le dispositif de valeur de différence est réalisé pour déterminer la différence entre les valeurs extrêmes du paramètre de force d'ouverture et du paramètre de force de fermeture.

8. Dispositif de fermeture de bâtiment (102) comportant une fermeture de bâtiment équipée d'un dispositif d'équilibrage de poids et d'un dispositif de surveillance (190) conforme à l'une des revendications précédentes pour permettre de surveiller le dispositif d'équilibrage de poids.

9. Dispositif de fermeture d'un bâtiment conforme à la revendication 8,
**caractérisé en ce que**
le dispositif d'équilibrage de poids (120) comprend au moins un ressort de traction (124, 126) et au dispositif de surveillance (190) est adjoint à un élément d'affichage de fonctionnement défectueux (196) pour afficher un défaut d'au moins un ressort de traction (124, 126) du dispositif d'équilibrage de poids (120).

10. Dispositif de fermeture de bâtiment (102) conforme à l'une des revendications 8 et 9,
**caractérisé en ce qu'**
un dispositif d'entraînement (118) comprend un moteur (142) pour permettre d'obtenir la force d'entraînement permettant l'ouverture ou la fermeture de la fermeture du bâtiment, et le dispositif de détection détecte le paramètre d'ouverture et le paramètre de fermeture à l'aide de paramètres d'entraînement tels que la puissance, l'intensité de courant et/ou la vitesse de rotation.

11. Entraînement de portail pour entraîner un portail équilibré par un dispositif d'équilibrage de poids,
**caractérisé en ce qu'**
il comprend un dispositif de surveillance conforme à l'une des revendications 1 à 7, pour permettre de surveiller le dispositif d'équilibrage de poids.

12. Procédé de surveillance pour permettre de surveiller un dispositif d'équilibrage de poids d'un dispositif de fermeture d'un bâtiment comprenant des étapes consistant à :
détecter un paramètre de force d'ouverture dépendant de la force d'ouverture nécessaire pour ouvrir le dispositif de fermeture du bâtiment,
détecter un paramètre de force de fermeture dépendant de la force de fermeture nécessaire pour fermer le dispositif de fermeture du bâtiment, et
surveiller l'état du dispositif d'équilibrage de poids à l'aide du paramètre d'ouverture et du paramètre de fermeture, **caractérisé en ce qu'**il comprend des étapes consistant à :
former une valeur de différence entre le paramètre de force d'ouverture et le paramètre de force de fermeture, et
surveiller cette valeur de différence.

13. Procédé de surveillance conforme à la revendication 12,
**caractérisé en ce que**
par comparaison de la force d'ouverture et de la force de fermeture on obtient une conclusion sur l'état du dispositif d'équilibrage de poids, un paramètre en corrélation avec la force, tel que par exemple l'absorption de puissance, l'absorption d'intensité de courant ou la vitesse de rotation d'un moteur d'entraînement étant surveillé, et au moins une valeur du paramètre lors d'une ouverture étant comparée à une valeur correspondante obtenue lors de la fermeture.

14. Procédé de surveillance conforme à la revendication 12 ou 13,
**caractérisé en ce qu'**
une valeur extrême correspondant à une force maximum au cours de l'ouverture est comparée à une valeur extrême correspondant à une force maximum au cours de la fermeture, cette comparaison étant utilisée pour surveiller le dispositif d'équilibrage de poids.
